# FASCICULE DE BREVET EUROPEEN

(11) **EP 3 849 850 B1**
(45) Date de publication et mention de la délivrance du brevet: **22.11.2023**
(21) Numéro de dépôt: 19770011.5
(22) Date de dépôt: 12.09.2019
(51) Int. Cl.: B60R 21/203

(54) **DISPOSITIF DE MONTAGE AMOVIBLE D'UN MODULE DE COUSSIN GONFLABLE**
VORRICHTUNG ZUR LÖSBAREN BEFESTIGUNG EINES AIRBAGMODULS
DEVICE FOR REMOVABLY MOUNTING AN AIRBAG MODULE

(30) Priorité: 14.09.2018 FR 1858319
(43) Date de publication de la demande: 21.07.2021
(73) Titulaire: Autoliv Development AB, 447 83 Vårgårda (SE)
(72) Inventeur: MOINARD, Fabrice, 86170 Vouzailles (FR)
(74) Mandataire: Poindron, Cyrille
(86) Numéro de dépôt international: PCT/EP2019/074306
(87) Numéro de publication internationale: WO 2020/053323

(56) Documents cités:
- DE-U1- 20 311 760
- US-B1- 6 276 711

## Description

La présente invention concerne de manière générale un dispositif de montage amovible d'un module de coussin gonflable sur un volant, et en particulier

Le document DE 203 11 760 U1 décrit un volant de véhicule automobile selon le préambule de la revendication 1.

Le document US2003173759 décrit un agencement de pour monter de manière amovible un module de coussin gonflable sur un volant. L'agencement comprend une plaque de montage qui définit des ouvertures pour recevoir les pieds d'une unité de coussin gonflable. La plaque est munie d'un ressort qui s'étend à travers les ouvertures pour fournir une fixation par encliquetage. Lorsqu'un effort de poussé est exercé sur un point déterminé du ressort celui est déplacé d'une manière prédéterminée et les portions du ressort sont guidées de sorte que celles-ci ne dépassent plus les ouvertures correspondantes, permettant ainsi de libérer le module. L'effort de poussé pour déverrouiller le ressort est appliqué sur une petite zone du ressort ce qui peut entraîner des mauvaises manipulations lors de l'opération de déverrouillage.

Un but de la présente invention est de répondre aux inconvénients du document de l'art antérieur mentionné ci-dessus et en particulier, de proposer un dispositif de montage amovible dont l'effort nécessaire pour déverrouiller le module de coussin gonflable est réduit et dont le démontage est facilité.

Pour cela un premier aspect de l'invention concerne un volant de véhicule automobile comprenant un dispositif de montage amovible d'un module de coussin gonflable sur le volant,
- le dispositif de montage comprenant au moins deux crochets liés à l'un du module de coussin gonflable ou du volant, les crochets coopérant avec des moyens d'insertion (35) situés sur l'autre du module de coussin gonflable ou du volant et un jonc élastique (30) pour former des moyens de maintien des crochets sur l'autre du module de coussin gonflable ou du volant dans des zones d'interaction avec les crochets,
   le jonc élastique étant maintenu en position par des moyens de blocage sur l'autre du module de coussin gonflable ou du volant, le jonc élastique comprenant
- des premières portions s'étendant dans les zones d'interaction pour former les moyens de maintien des crochets,
- des deuxièmes portions situé entre les premières portions du jonc élastique,
- le dispositif de montage amovible comprenant en outre des éléments de guidage,
- les éléments de guidage formant deux chemins de démontage distincts pour guider un outil de démontage du dispositif de montage amovible du module de coussin gonflable , caractérisé en ce que
- le volant comprend une ouverture unique de démontage pour insérer l'outil de démontage le long des deux chemins de démontage,
- l'ouverture et les éléments de guidage étant agencés de sorte que le déplacement de l'outil de démontage au travers de l'ouverture le long de chacun des deux chemins de démontage et sur les deuxièmes portions provoque le déplacement des premières portions du jonc élastique hors des zones d'interaction avec les crochets pour libérer les crochets de l'autre du module de coussin gonflable ou du volant lors du déplacement de l'outil de démontage.

On comprend aussi que l'axe de rotation du volant est l'axe autour duquel le volant peut tourner pour diriger un véhicule sur lequel il est monté. Les moyens d'insertion peuvent prendre la forme d'un ou plusieurs trous, ouvertures, rainures ou décrochements par exemple. Les moyens de guidage peuvent prendre la forme d'un ou plusieurs pions, gorges, rainures ou nervures par exemple. Le recourt à l'ouverture unique permet notamment de simplifier les opérations de démontage, de simplifier l'architecture du volant et de limiter l'impact du dispositif de montage sur le style du volant.

Selon une autre variante de réalisation, les éléments de guidage et les deuxièmes portions du jonc élastique forment les deux chemins de démontage. L'ensemble est donc plus compact puisque que des parties du jonc participent aussi au guidage ; le jonc combine donc plusieurs fonctions.

Selon une autre variante de réalisation, les deux chemins de démontage distincts sont rectilignes et l'outil de démontage se déplace le long des chemins de démontage pour libérer les crochets de l'autre du module de coussin gonflable ou du volant. En d'autres termes, l'outil de démontage se déplace en translation, typiquement en effectuant un effort de poussée, pour déplacer et/déformer les premières portions du jonc élastique et libérer les crochets.

Selon une autre variante de réalisation, l'outil de démontage se déplace selon un mouvement de rotation de l'outil de démontage par rapport à l'autre du module de coussin gonflable ou du volant pour libérer les crochets de l'autre du module de coussin gonflable ou du volant.

Selon une autre variante de réalisation, les crochets sont liés au module de coussin gonflable.

Selon une autre variante de réalisation, les crochets sont liés au module de coussin gonflable, le dispositif de montage comprenant en outre une plaque de montage conçue pour être montée sur l'armature du volant, la plaque de montage comprenant une pluralité d'ouvertures formant les moyens d'insertion, chaque ouverture étant adaptée pour recevoir un crochet, les moyens de blocage du jonc élastique étant formés sur la plaque de montage ou le volant.

La plaque de montage permet notamment de faciliter les opérations d'assemblage. En effet, le jonc élastique peut être pré-assemblé sur la plaque de montage avant que celle-ci ne soit montée sur le volant. En outre, ce mode de réalisation permet d'intercaler une partie d'un système d'avertisseur sonore entre la plaque et l'armature du volant.

Selon une autre variante de réalisation, les éléments de guidage sont formés en saillie sur la plaque de montage.

Selon une autre variante de réalisation, les deux chemins de démontage forment un V donc la pointe et dirigée vers l'extérieur de l'autre du module de coussin gonflable ou du volant.

Selon une autre variante de réalisation, les deux chemins de démontage ont des trajectoires sécantes en un point S, l'ouverture unique de démontage étant située au niveau du point S.

Selon une autre variante de réalisation, le dispositif de montage comprend des plots de guidage du jonc élastique, au voisinage du jonc élastique, entre la deuxième portion et chaque première portion du jonc élastique, de sorte que le déplacement de l'outil sur les chemins de démontage engendre une rotation d'une première portion en dehors de la zone d'interaction. Un tel positionnement d'un plot de guidage bloquant une direction de déplacement du jonc élastique fait qu'un effort de poussée appliqué par l'outil de démontage (inséré à travers l'ouverture unique de démontage) sur une deuxième portion entraine une flexion du jonc et une rotation d'une première partie.

Selon une autre variante de réalisation, le jonc élastique est ouvert, les premières portions étant situées aux extrémités libres du jonc élastique.

Selon une autre variante de réalisation, les moyens de blocage empêchent le mouvement du jonc élastique (30) selon une direction sensiblement perpendiculaire au plan contenant le jonc élastique.

Selon une autre variante de réalisation, les moyens de blocage comprennent au moins des premiers crochets disposés au voisinage des moyens d'insertions.

Selon une autre variante de réalisation, le volant comprend un élément d'obstruction formant un obstacle pour empêcher l'outil de démontage de toucher une zone des deuxièmes parties du jonc élastique, l'élément d'obstruction étant positionné entre les deux chemins de démontage. Cela permet d'éviter une insertion de l'outil de démontage selon une mauvaise direction qui pourrait détériorer des composants à proximité.

Un deuxième aspect de l'invention concerne un procédé de démontage d'un module de coussin gonflable monté sur un volant de véhicule automobile comprenant un dispositif de montage amovible du module de coussin gonflable selon le premier aspect de l'invention, caractérisé en ce qu'il comprend
- une premier étape d'introduction d'un outil de démontage par l'ouverture unique de démontage,
- une étape de déplacement de l'outil de démontage le long de l'un des deux chemin de démontage jusque sur l'une des deuxièmes portions du jonc élastique,
- une étape de déplacement de ladite deuxième portions par l'outil de démontage pour provoquer le déplacement de l'une des premières portions du jonc élastique hors de la zone d'interaction avec le crochet correspondant
- une deuxième étape d'introduction d'un outil de démontage par l'ouverture unique de démontage l'outil,
- une étape de déplacement de l'outil de démontage le long de l'autre des deux chemins de démontage jusque sur une autre des deuxièmes portions du jonc élastique,
- une étape de déplacement de ladite autre deuxième portions pour provoquer le déplacement de l'une des autres premières portions du jonc élastique hors de la zone d'interaction avec le crochet correspondant.D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
   - la figure 1 représente une première vue éclatée d'un volant équipé du dispositif de montage amovible d'un module de coussin gonflable ;
   - la figure 2 présente une vue de dessous d'une partie du dispositif de montage amovible d'un module de coussin gonflage en position de verrouillage ;
   - la figure 3 présente une vue de dessous d'une partie du dispositif de montage amovible d'un module de coussin gonflage en position de déverrouillage;

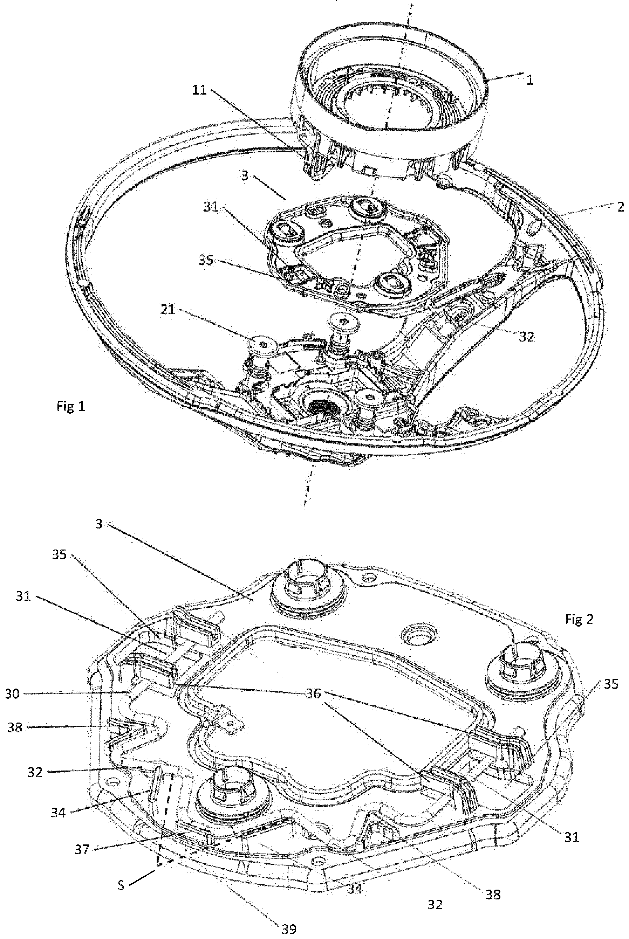

Le volant de véhicule automobile et le dispositif de montage amovible selon l'invention va à présent être décrit en référence aux figures 1 à 3.

Par la suite, on désignera par axe de rotation A du volant 2 l'axe autour duquel la rotation du volant provoque l'orientation des roues du véhicule grâce un mécanisme de transmission (non représenté) mécanique, électrique et/ou hydraulique.

De façon connue en soit, un module 1 de coussin gonflable 1 est monté sur le volant 2 par l'intermédiaire d'une plaque de fixation 3. La fixation de la plaque 3 de montage sur le volant 2 est réalisée par l'intermédiaire de vis 21. Le module 1 de coussin gonflable est monté sur la plaque de montage 3 par clipsage. La plaque de montage comprend une pluralité d'ouvertures ou orifices 35 au travers desquels des crochets 11 du module 1 de coussin gonflable sont introduits. Le clipsage du module 1 sur la plaque de montage 3 est réalisé par un jonc élastique 30 qui vient interagir avec les crochets 11 dans une zone d'interaction au niveau des ouvertures 35. Selon la variante de réalisation représentée, le jonc élastique 30 est monté sur la plaque de montage 3, toutefois on peut envisager des variantes de réalisation dans lesquelles le jonc élastique 30 est monté ou solidaire de l'armature 2 du volant et/ou du module 1 de coussin gonflable. De même le système de fixation peut s'envisager sans la plaque de montage 3.

Comme représenté sur la figure 2, le jonc élastique 30 comprend des premières portions 31 qui s'étendent au travers des ouvertures 35 de la plaque de montage 3. Lorsque le module de coussin gonflable 1 est monté sur la plaque de montage 3, les premières portions 31 du jonc élastique 30 sont engagées dans les crochets 11 du module de coussin gonflable 1 de sorte qu'il n'est plus possible de retirer les crochets 11 sans désengager les premières portions 31 du jonc élastique 30. Cet assemblage assure le maintien du module de coussin gonflable 1 sur le volant 2 entre autre lors du déploiement du coussin.

Selon l'invention, le jonc élastique 30 comprend une deuxième portion 32 situé entre les premières portions 31 et des moyens de guidage 34 d'un outil de démontage. Dans le mode de réalisation présenté, les moyens de guidage 34 forment conjointement avec le jonc élastique, deux chemins de démontage 39 distincts pour guider un outil de démontage du dispositif de montage amovible du module de coussin gonflable. Lors du démontage, l'outil de démontage est introduit par une ouverture 41 présente sur le volant et est guidé par les moyens de guidage 34 le long des deux chemins de démontage.

Selon l'invention, le volant comprend une seule ouverture. Ainsi, lors du démontage du module de coussin gonflable l'outil de démontage est introduit une première fois par l'ouverture du volant pour suivre le premier chemin de démontage et une deuxième fois par la même ouverture pour suivre l'autre chemin de démontage.

L'outil de démontage se déplace le long des deux chemins de démontage formé par les moyens de guidage 34 jusqu'à qu'aux deuxième portions 32 du jonc 30 élastique. L'outil de démontage provoque alors le déplacement des premières portions 31 du jonc 30 élastique hors de la zone d'interaction avec les crochets 11 par une action sur les deuxièmes portions 32 du jonc élastique. L'action exercée successivement par l'outil de démontage sur chaque deuxième portion 32 du jonc élastique pour déplacer successivement chaque première portion est soit une poussée, une traction, un pivotement ou une combinaison de ces trois mouvements.

Selon une variante de réalisation, les deux chemins de démontage sont également formés par les deuxièmes portions 32 du jonc 30 élastique. Les deux chemins de démontage ont par exemple des trajectoires rectilignes. Selon la variante de réalisation représentée, les deux chemins ont des trajectoires sécantes par exemple en forme de V. La pointe de V correspond sensiblement à la position de l'ouverture d'introduction du volant.

Cette ouverture d'introduction du volant est placée sur la partie extérieure de volant de sorte à être accessible depuis l'extérieur pour un utilisateur utilisant l'outil de démontage.

Le dispositif de montage peut comprendre un élément d'obstruction 37 afin de protéger les deuxièmes portions 32 du jonc élastique lors de l'introduction de l'outil de démontage au travers de l'ouverture. L'élément d'obstruction comprend par exemple une paroi 37 placée entre les deux chemins de démontage. Cette paroi 37 permet également de bloquer le mouvement du jonc élastique 30 dans la direction d'introduction de l'outil 4 de démontage

Selon la variante de réalisation représentée, le jonc élastique 30 est ouvert, les premières portions formant alors les extrémités libres du jonc élastique 30. L'utilisation d'un jonc élastique 30 ouvert permet de réduire l'effort à exercer sur la deuxième portion 32 pour provoquer le déplacement des premières portions 31.

Le dispositif de démontage peut comprendre également au moins un plot de guidage 38 disposé au voisinage du jonc 30 élastique. Selon un mode de réalisation chaque plot de guidage 38 est positionné entre les premières et deuxièmes portions 31, 32. Les plots de guidage 38 assurent le positionnement du jonc élastique 30 sur la plaque lors de l'effort appliqué par l'outil de démontage pour induire le mouvement de rotation de la première portion 31 du jonc élastique

Selon la variante de réalisation représentée aux figures, les plots de guidage 38 et/ou l'élément d'obstruction 37 et/ou les moyens de guidage 34 et les plots de pivot 33 et/ou les plots de guidage 34 sont formées sur la plaque 3 de montage. Toutefois selon d'autres variantes de réalisation les moyens de guidage peuvent être formés sur l'armature 2 du volant et/ou sur le module 1 de coussin gonflable. Dans ce mode de réalisation la plaque de montage 3 n'est pas nécessaire, les ouvertures 35 étant formée dans la partie centrale du le volant ou le module de coussin gonflable.

Le jonc élastique 30 et/ou les premières et deuxièmes portions du jonc élastique 30 sont maintenus sur la plaque de montage 3 par des moyens de blocage 36. Ces moyens de blocage 36 assurant le maintien du jonc élastique dans un plan sensiblement parallèle à la plaque de de montage 3 tout en le laissant libre de se déplacer dans ce plan. En d'autre terme, le jonc élastique 30 ou les première et deuxième portions 31, 32 du jonc élastique 30 ne peuvent pas se déplacer dans une direction perpendiculaire à la planque de montage 3.

Selon la variante de réalisation représentée, les moyens de blocages 36 prennent la forme de crochet en forme de L issus de la plaque de montage 3. Des premiers crochets 36 sont disposés de part est d'autre des ouvertures 35. Ces premiers crochets assurent le positionnement correct des premières portions 31 du jonc élastique 30 lors de l'opération de montage du module de coussin gonflable. Ces premiers crochets 36 assurent également le guidage de premières portions 31 lors du déverrouillage.

Selon une autre variante de réalisation, les moyens de blocage 36 peuvent être issus de l'armature 2 du volant et/ou sur le module 1 de coussin gonflable. Dans ce mode de réalisation la plaque de montage 3 n'est pas nécessaire, les ouvertures 35 étant formée dans la partie centrale du le volant ou le module de coussin gonflable.

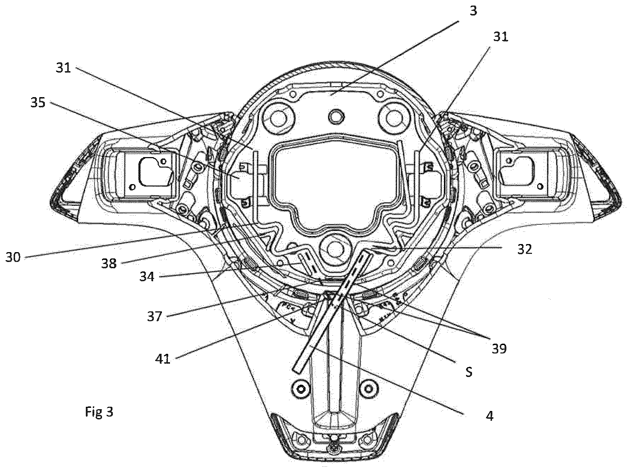

La figure 3 représente le dispositif de montage selon l'invention dans une position intermédiaire de déverrouillage dans laquelle une seule des deux premières portions est déplacée hors de la zone d'interaction avec les crochets. L'outil 4 de démontage est introduit par l'ouverture le long du chemin de démontage à droite sur la figure 3.. Une poussé vers le haut de la figure et/ou une rotation dans le sens anti horaire de la figure de l'outil de démontage entraine une rotation de la première portion 31.

Pour déverrouiller complètement le module il suffit de répéter l'opération du côté gauche un introduisant l'outil 4 de démontage par l'ouverture unique de démontage 41 du volant, par exemple au niveau du point d'intersection S des chemins de démontage.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Volant de véhicule automobile comprenant un dispositif de montage amovible d'un module de coussin gonflable (1) sur le volant (2),
- le dispositif de montage comprenant au moins deux crochets (11) liés à l'un du module de coussin gonflable (1) ou du volant (2), les crochets (11) coopérant avec des moyens d'insertion (35) situés sur l'autre du module de coussin gonflable (1) ou du volant (2) et un jonc élastique (30) pour former des moyens de maintien des crochets (11) sur l'autre du module de coussin gonflable (1) ou du volant (2) dans des zones d'interaction avec les crochets (11),
le jonc élastique (30) étant maintenu en position par des moyens de blocage (36) sur l'autre du module de coussin gonflable (1) ou du volant (2), le jonc élastique (30) comprenant :
- des premières portions (31) s'étendant dans les zones d'interaction pour former les moyens de maintien des crochets (11)
- des deuxièmes portions (32) situé entre les premières portions (31) du jonc élastique (30),
- le dispositif de montage amovible comprenant en outre des éléments de guidage (34),
- les éléments de guidage (34) formant deux chemins de démontage (39) distincts pour guider un outil de démontage du dispositif de montage amovible du module de coussin gonflable , **caractérisé en ce que**
- le volant comprend une ouverture unique de démontage (41) pour insérer l'outil de démontage le long des deux chemins de démontage,
- l'ouverture et les éléments de guidage (34) étant agencés de sorte que le déplacement de l'outil de démontage au travers de l'ouverture le long de chacun des deux chemins de démontage et sur les deuxièmes portions (32) provoque le déplacement des premières portions (31) du jonc élastique (30) hors des zones d'interaction avec les crochets (11) pour libérer les crochets (11) de l'autre du module de coussin gonflable (1) ou du volant (2) lors du déplacement de l'outil de démontage.

2. Volant de véhicule automobile selon la revendication 1, **caractérisé en ce que** les éléments de guidage (34) et les deuxièmes portions (32) du jonc (30) élastique forment les deux chemins de démontage.

3. Volant de véhicule automobile selon la revendication 1, **caractérisé en ce que** les deux chemins de démontage distincts sont rectilignes et l'outil de démontage se déplace le long des chemins de démontage pour libérer les crochets (11) de l'autre du module de coussin gonflable (1) ou du volant (2).

4. Volant de véhicule automobile selon la revendication 1, **caractérisé en ce que** l'outil de démontage se déplace selon un mouvement de rotation de l'outil de démontage par rapport à l'autre du module de coussin gonflable (1) ou du volant (2) pour libérer les crochets (11) de l'autre du module de coussin gonflable (1) ou du volant (2).

5. Volant de véhicule automobile selon l'une des revendications précédentes, **caractérisé en ce que** les crochets (11) sont liés au module de coussin gonflable.

6. Volant de véhicule automobile selon l'une des revendications 1 à 4, **caractérisé en ce que** les crochets (11) sont liés au module de coussin gonflable, le dispositif de montage comprenant en outre une plaque de montage (3) conçue pour être montée sur l'armature du volant (2),
la plaque de montage (3) comprenant une pluralité d'ouvertures (35) formant les moyens d'insertion, chaque ouverture (35) étant adaptée pour recevoir un crochet (11), les moyens de blocage (36) du jonc élastique (30) étant formés sur la plaque de montage (3) ou le volant (2).

7. Volant de véhicule automobile selon la revendication précédente, **caractérisé en ce que** les éléments de guidage (34) sont formés en saillie sur la plaque de montage (3).

8. Volant de véhicule automobile selon l'une des revendications précédentes, **caractérisé en ce que** les deux chemins de démontage forment un V donc la pointe et dirigée vers l'extérieur de l'autre du module de coussin gonflable (1) ou du volant (2).

9. Volant de véhicule automobile selon l'une des revendications précédentes, **caractérisé en ce que** les deux chemins de démontage ont des trajectoires sécantes en un point S, l'ouverture unique de démontage (41) étant située au voisinage du point S.

10. Volant de véhicule automobile selon l'une des revendications précédentes, **caractérisé en ce que** le dispositif de montage comprend des plots de guidage (38) du jonc élastique, au voisinage du jonc élastique (30), entre la deuxième portion (32) et chaque première portion (31) du jonc élastique (30), de sorte que le déplacement de l'outil sur les chemins de démontage engendre une rotation d'une première portion (31) en dehors de la zone d'interaction.

11. Volant de véhicule automobile selon l'une des revendications précédentes, **caractérisé en ce que** le jonc élastique (30) est ouvert, les premières portions (31) étant situées aux extrémités libres du jonc élastique (30).

12. Volant de véhicule automobile selon l'une des revendications précédentes **caractérisé en ce que** les moyens de blocage (36) empêchent le mouvement du jonc élastique (30) selon une direction sensiblement perpendiculaire au plan contenant le jonc élastique (30).

13. Volant de véhicule automobile selon l'une des revendications précédentes, **caractérisé en ce que** les moyens de blocage comprennent au moins des premiers crochets (36) disposés au voisinage des moyens d'insertions (35).

14. Volant de véhicule automobile selon l'une des revendications précédentes **caractérisé en ce qu'**il comprend un élément d'obstruction (37) formant un obstacle pour empêcher l'outil de démontage de toucher une zone des deuxièmes parties du jonc élastique, l'élément d'obstruction étant positionné entre les deux chemins de démontage.

15. Procédé de démontage d'un module de coussin gonflable monté sur un volant de véhicule automobile comprenant un dispositif de montage amovible du module de coussin gonflable (1) selon l'une des revendications 1 à 14 **caractérisé en ce qu'**il comprend
- une premier étape d'introduction d'un outil de démontage par l'ouverture unique de démontage (14),
- une étape de déplacement de l'outil de démontage (4) le long de l'un des deux chemins de démontage (39) jusque sur l'une des deuxièmes portions (32) du jonc élastique (30),
- une étape de déplacement de ladite deuxième portions (32) pour provoquer le déplacement de l'une des premières portions (31) du jonc élastique (30) hors de la zone d'interaction avec le crochet (11) correspondant
- une deuxième étape d'introduction d'un outil de démontage par l'ouverture unique de démontage (14) l'outil,
- une étape de déplacement de l'outil de démontage (4) le long de l'autre des deux chemine de démontage (39) jusque sur une autre des deuxièmes portions (32) du jonc élastique (30),
- une étape de déplacement de ladite autre deuxième portions (32) pour provoquer le déplacement de l'une des autres premières portions (31) du jonc élastique (30) hors de la zone d'interaction avec le crochet (11) correspondant.

## Patentansprüche

1. Kraftfahrzeuglenkrad, umfassend eine Vorrichtung für eine lösbare Montage eines Airbagmoduls (1) an dem Lenkrad (2),
- die Montagevorrichtung umfassend mindestens zwei Haken (11), die mit einem des Airbagmoduls (1) oder des Lenkrads (2) verbunden sind, wobei die Haken (11) mit Einführmitteln (35), die sich an dem anderen des Airbagmoduls (1) oder des Lenkrads (2) befinden, und einem elastischen Ring (30) zusammenwirken, um Mittel zum Halten der Haken (11) an dem anderen des Airbagmoduls (1) oder des Lenkrads (2) in Wechselwirkungsbereichen mit den Haken (11) zu bilden,
wobei der elastische Ring (30) durch Blockiermittel (36) an dem anderen des Airbagmoduls (1) oder des Lenkrads (2) in Position gehalten wird, der elastische Ring (30) umfassend:
- erste Abschnitte (31), die sich in den Wechselwirkungsbereichen erstrecken, um die Mittel zum Halten der Haken (11) zu bilden
- zweite Abschnitte (32), die zwischen den ersten Abschnitten (31) des elastischen Rings (30) angeordnet sind,
- die Vorrichtung für die lösbare Montage ferner umfassend Führungselemente (34),
- wobei die Führungselemente (34) zwei getrennte Demontagepfade (39) bilden, um ein Werkzeug zum Demontieren der Vorrichtung für die lösbare Montage des Airbagmoduls zu führen, **dadurch gekennzeichnet, dass**
- das Lenkrad eine einzelne Demontageöffnung (41) umfasst, um das Demontagewerkzeug entlang der zwei Demontagepfade einzuführen,
- wobei die Öffnung und die Führungselemente (34) so angeordnet sind, dass das Bewegen des Demontagewerkzeugs durch die Öffnung entlang jedes der zwei Demontagepfade und auf den zweiten Abschnitten (32) das Bewegen der ersten Abschnitte (31) des elastischen Rings (30) aus den Wechselwirkungsbereichen mit den Haken (11) bewirkt, um die Haken (11) von dem anderen des Airbagmoduls (1) oder des Lenkrads (2) bei dem Bewegen des Demontagewerkzeugs zu lösen.

2. Kraftfahrzeuglenkrad nach Anspruch 1, **dadurch gekennzeichnet, dass** die Führungselemente (34) und die zweiten Abschnitte (32) des elastischen Rings (30) die zwei Demontagepfade bilden.

3. Kraftfahrzeuglenkrad nach Anspruch 1, **dadurch gekennzeichnet, dass** die zwei getrennten Demontagepfade geradlinig sind und das Demontagewerkzeug sich entlang der Demontagepfade bewegt, um die Haken (11) des anderen des Airbagmoduls (1) oder des Lenkrads (2) zu lösen.

4. Kraftfahrzeuglenkrad nach Anspruch 1, **dadurch gekennzeichnet, dass** sich das Demontagewerkzeug in einer Drehbewegung des Demontagewerkzeugs in Bezug auf das andere des Airbagmoduls (1) oder des Lenkrads (2) bewegt, um die Haken (11) des anderen des Airbagmoduls (1) oder des Lenkrads (2) zu lösen.

5. Kraftfahrzeuglenkrad nach einem der vorstehenden Ansprüche,
**dadurch gekennzeichnet, dass** die Haken (11) mit dem Airbagmodul verbunden sind.

6. Kraftfahrzeuglenkrad nach einem der Ansprüche 1 bis 4,
**dadurch gekennzeichnet, dass** die Haken (11) mit dem Airbagmodul verbunden sind, die Montagevorrichtung ferner umfassend eine Montageplatte (3), die zum Montiertwerden an dem Rahmen des Lenkrads (2) ausgelegt ist,
die Montageplatte (3) umfassend eine Vielzahl von Öffnungen (35)s, die die Einführmittel bilden, wobei jede Öffnung (35) angepasst ist, um einen Haken (11) aufzunehmen, wobei die Blockiermittel (36) des elastischen Rings (30) auf der Montageplatte (3) oder dem Lenkrad (2) ausgebildet sind.

7. Kraftfahrzeuglenkrad nach dem vorstehenden Anspruch,
**dadurch gekennzeichnet, dass** die Führungselemente (34) auf der Montageplatte (3) vorspringend ausgebildet sind.

8. Kraftfahrzeuglenkrad nach einem der vorstehenden Ansprüche,
**dadurch gekennzeichnet, dass** die zwei Demontagepfade ein V bilden, also die Spitze, und in Richtung der Außenseite des anderen des Airbagmoduls (1) oder des Lenkrads (2) gerichtet ist.

9. Kraftfahrzeuglenkrad nach einem der vorstehenden Ansprüche,
**dadurch gekennzeichnet, dass** die zwei Demontagepfade Trajektorien aufweisen, die sich in einem Punkt S schneiden, wobei sich die einzelne Demontageöffnung (41) in der Nähe des Punktes S befindet.

10. Kraftfahrzeuglenkrad nach einem der vorstehenden Ansprüche,
**dadurch gekennzeichnet, dass** die Montagevorrichtung Führungsnoppen (38) für den elastischen Ring in der Nähe des elastischen Rings (30) zwischen dem zweiten Abschnitt (32) und jedem ersten Abschnitt (31) des elastischen Rings (30) umfasst, so dass das Bewegen des Werkzeugs auf den Demontagepfaden eine Drehung eines ersten Abschnitts (31) außerhalb des Wechselwirkungsbereichs erzeugt.

11. Kraftfahrzeuglenkrad nach einem der vorstehenden Ansprüche,
**dadurch gekennzeichnet, dass** der elastische Ring (30) offen ist, wobei die ersten Abschnitte (31) an den freien Enden des elastischen Rings (30) angeordnet sind.

12. Kraftfahrzeuglenkrad nach einem der vorstehenden Ansprüche,
**dadurch gekennzeichnet, dass** die Blockiermittel (36) die Bewegung des elastischen Rings (30) in einer Richtung verhindern, die im Wesentlichen senkrecht zu der Ebene ist, die den elastischen Ring (30) enthält.

13. Kraftfahrzeuglenkrad nach einem der vorstehenden Ansprüche,
**dadurch gekennzeichnet, dass** die Blockiermittel mindestens erste Haken (36) umfassen, die in der Nähe der Einführmittel (35) angeordnet sind.

14. Kraftfahrzeuglenkrad nach einem der vorstehenden Ansprüche,
**dadurch gekennzeichnet, dass** es ein Sperrelement (37) umfasst, das eine Sperre bildet, um zu verhindern, dass das Demontagewerkzeug einen Bereich der zweiten Teile des elastischen Rings berührt, wobei das Sperrelement zwischen den zwei Demontagepfaden positioniert ist.

15. Verfahren zum Demontierens eines an einem Kraftfahrzeuglenkrad montierten Airbagmoduls, umfassend eine Vorrichtung für die lösbare Montage des Airbagmoduls (1) nach einem der Ansprüche 1 bis 14,
**dadurch gekennzeichnet, dass** es umfasst
- einen ersten Schritt des Einführens eines Demontagewerkzeugs durch die einzelne Demontageöffnung (14),
- einen Schritt des Bewegens des Demontagewerkzeugs (4) entlang eines der zwei Demontagepfade (39) bis auf einen der zweiten Abschnitte (32) des elastischen Rings (30),
- einen Schritt des Bewegens des zweiten Abschnitts (32), um die Bewegung des einen der ersten Abschnitte (31) des elastischen Rings (30) aus dem Wechselwirkungsbereich mit dem entsprechenden Haken (11) heraus zu bewirken
- einen zweiten Schritt des Einführens eines Demontagewerkzeugs durch die einzelne Demontageöffnung (14) des Werkzeugs,
- einen Schritt des Bewegens des Demontagewerkzeugs (4) entlang des anderen der zwei Demontagepfade (39) bis auf einen anderen der zweiten Abschnitte (32) des elastischen Rings (30),
- einen Schritt des Bewegens des anderen zweiten Abschnitts (32), um die Bewegung des einen der anderen Abschnitte (31) des elastischen Rings (30) aus dem Wechselwirkungsbereich mit dem entsprechenden Haken (11) heraus zu bewirken.

## Claims

1. A motor vehicle steering wheel, comprising a device for removably mounting an airbag module (1) on the steering wheel (2),
- the mounting device comprising at least two hooks (11) connected to one of the airbag module (1) or the steering wheel (2), the hooks (11) cooperating with insertion means (35) located on the other of the airbag module (1) or the steering wheel (2), and a resilient ring (30) for forming means for holding the hooks (11) on the other of the airbag module (1) or the steering wheel (2) in zones of interaction with the hooks (11),
the resilient ring (30) being held in position by locking means (36) on the other of the airbag module (1) or the steering wheel (2), the resilient ring (30) comprising:
- first portions (31) extending in the interaction zones to form the means for holding the hooks (11),
- second portions (32) located between the first portions (31) of the resilient ring (30),
- the device for removable mounting further comprising guide elements (34),
- the guide elements (34) forming two separate dismantling paths (39) for guiding a tool for dismantling the device for removably mounting the airbag module**,characterized in that**
- the steering wheel comprises a single dismantling opening (41) for inserting the dismantling tool along the two dismantling paths,
- the opening and the guide elements (34) being arranged such that the movement of the dismantling tool through the opening along each of the two dismantling paths and on the second portions (32) causes the movement of the first portions (31) of the resilient ring (30) outside the zones of interaction with the hooks (11) in order to free the hooks (11) from the other of the airbag module (1) or the steering wheel (2) during the movement of the dismantling tool.

2. The motor vehicle steering wheel according to claim 1,
**characterized in that** the guide elements (34) and the second portions (32) of the resilient ring (30) form the two dismantling paths.

3. The motor vehicle steering wheel according to claim 1,
**characterized in that** the two separate dismantling paths are rectilinear and the dismantling tool moves along the dismantling paths to release the hooks (11) from the other of the airbag module (1) or the steering wheel (2).

4. The motor vehicle steering wheel according to claim 1,
**characterized in that** the dismantling tool moves according to a rotational movement of the dismantling tool relative to the other of the airbag module (1) or the steering wheel (2) in order to release the hooks (11) from the other of the airbag module (1) or the steering wheel (2).

5. The motor vehicle steering wheel according to any of the preceding claims, **characterized in that** the hooks (11) are connected to the airbag module.

6. The motor vehicle steering wheel according to any of claims 1 to 4,
**characterized in that** the hooks (11) are connected to the airbag module, the mounting device further comprising a mounting plate (3) designed to be mounted on the frame of the steering wheel (2),
the mounting plate (3) comprising a plurality of openings (35) forming the insertion means, each opening (35) being designed to receive a hook (11), the locking means (36) of the resilient ring (30) being formed on the mounting plate (3) or the steering wheel (2).

7. The motor vehicle steering wheel according to the preceding claim,
**characterized in that** the guide elements (34) are formed projecting from the mounting plate (3).

8. The motor vehicle steering wheel according to any of the preceding claims, **characterized in that** the two dismantling paths form a V, the tip of which therefore and directed towards the outside of the other of the airbag module (1) or the steering wheel (2).

9. The motor vehicle steering wheel according to any of the preceding claims,
**characterized in that** the two dismantling paths have trajectories that intersect at a point S, the single dismantling opening (41) being located in the vicinity of the point S.

10. The motor vehicle steering wheel according to any of the preceding claims, **characterized in that** the mounting device comprises blocks (38) for guiding the resilient ring, in the vicinity of the resilient ring (30), between the second portion (32) and each first portion (31) of the resilient ring (30), so that the movement of the tool on the dismantling paths generates a rotation of a first portion (31) outside the interaction zone.

11. The motor vehicle steering wheel according to any of the preceding claims, **characterized in that** the resilient ring (30) is open, the first portions (31) being located at the free ends of the resilient ring (30).

12. The motor vehicle steering wheel according to any of the preceding claims, **characterized in that** the locking means (36) prevent the movement of the resilient ring (30) in a direction substantially perpendicular to the plane containing the resilient ring (30).

13. The motor vehicle steering wheel according to any of the preceding claims, **characterized in that** the locking means comprise at least first hooks (36) arranged in the vicinity of the insertion means (35).

14. The motor vehicle steering wheel according to any of the preceding claims, **characterized in that** it comprises an obstruction element (37) that forms an obstacle to prevent the dismantling tool from touching a zone of the second parts of the resilient ring, the obstruction element being positioned between the two dismantling paths.

15. A method for dismantling an airbag module mounted on a motor vehicle steering wheel comprising a device for removably mounting the airbag module (1) according to any of claims 1 to 14, **characterized in that** it comprises
- a first step of introducing a dismantling tool via the single dismantling opening (14),
- a step of moving the dismantling tool (4) along one of the two dismantling paths (39) until on one of the second portions (32) of the resilient ring (30),
- a step of moving said second portions (32) to cause the movement of one of the first portions (31) of the resilient ring (30) outside the zone of interaction with the corresponding hook (11),
- a second step of introducing a dismantling tool via the single dismantling opening (14) the tool,
- a step of moving the dismantling tool (4) along the other of the two dismantling paths (39) until on another of the second portions (32) of the resilient ring (30),
- a step of moving said other second portions (32) to cause the movement of one of the other first portions (31) of the resilient ring (30) outside the zone of interaction with the corresponding hook (11).
